Europäisches Patentamt

European Patent Office

Office européen des brevets

(11) Publication number: **0 094 449**
**B1**

(12) **EUROPEAN PATENT SPECIFICATION**

(45) Date of publication of patent specification: **01.10.86**

(21) Application number: **82104430.2**

(22) Date of filing: **19.05.82**

(51) Int. Cl.⁴: **G 10 L 7/08, B 60 G 1/00**

(54) **Speech recognition system for an automotive vehicle.**

(43) Date of publication of application:
**23.11.83 Bulletin 83/47**

(45) Publication of the grant of the patent:
**01.10.86 Bulletin 86/40**

(84) Designated Contracting States:
**DE FR GB**

(56) References cited:
**EP-A-0 056 587**
**US-A-4 087 630**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Kishi, Norimasa**
**150-4, Hitorizawa-cho Isogo-ku**
**Yokohama-shi Kanagawa-ken (JP)**
Inventor: **Noso, Kazunori**
**68, Oppamahigashi-cho 3-chome**
**Yokosuka-shi Kanagawa-ken (JP)**

(74) Representative: **Patentanwälte TER MEER -**
**MÜLLER - STEINMEISTER**
**Mauerkircherstrasse 45**
**D-8000 München 80 (DE)**

Courier Press, Leamington Spa, England.

# Description

The present inventions relates generally to a speech recognition system for an automotive vehicle, and more particularly to a speech recognition system by which a plurality of predetermined spoken instructions are selectively recognized according to vehicle-travelling conditions. As disclosed in prior, not prepublished EP—A—56 587, one of those travelling conditions could be the setting of a start switch for generating a start signal supplied to a controller for reducing the sound level from a vehicle radio or the like in order to avoid an erroneous speech recognition and malinstruction during travelling.

Conventionally, there is well known a speech recognizer which can activate various actuators in response to human spoken instructions. When this speech recognizer is mounted on a vehicle, the headlight, for instance, can be turned on or off by the driver's spoken instruction such as "Headlight on" or "Headlight off". Such a speech recognizer usually can recognize various spoken instructions in order to control various actuators; however; apart from malinstruction by other sound sources, there are some further problems involved in applying this system to an automotive vehicle. In the case where the speech recognizer is so designed as to activate a door-opening mechanism in response to the driver's spoken instruction, for example, "Door open", if some passengers have a conversation including the phrase "Door open" while the vehicle is travelling, a dangerous situation may occur in that all the vehicle doors will open while the vehicle is travelling at high speed. Therefore, generally, there is provided a recognition switch which allows spoken instructions to be inputted to the speech recognizer only while this switch is depressed; even so, from the standpoint of safety spoken phrase such as "Door open" should not be recognized by the speech recognizer at all while the vehicle is travelling. On the other hand, there are some spoken instructions, for instance, such as "Headlight high-beam" which are usally used only while the vehicle is travelling and, of course, there are many spoken instructions such as "Air conditioner on/off", "Radio on/off", "Channel 3" etc., which are used regardless of vehicle's travelling conditions.

Furthermore, from the standpoint of improvement in recognition performance, it is desirable to reduce the number of spoken instructions.

A more detailed description of a typical prior art speech recognizer will be given below with reference to the attached drawing in conjunction with the present invention.

With these problems in mind therefore, it is the primary object of the present invention to provide a speech recognition system for an automotive vehicle by which a plurality of actuators for conducting some necessary functions in an automotive vehicle can selectively be activated according to vehicle-travelling conditions, in such a way that a spoken instruction such as "Door open" is recognized only when vehicle speed is zero, "Headlight high-beam" is recognized only when vehicle speed reaches a fixed rate, and "Air conditioner on" is recognized regardless of vehicle speed.

To achieve the above mentioned object, the speech recognition system for an automotive vehicle according to the preamble of claim 1 comprises in accordance with the present invention a vehicle speed detecting means for detecting the vehicle speed and outputting signals corresponding thereto, and a speech selecting means responsive to the vehicle speed signals for classifying the detected vehicle speed by signal magnitude and selectively allowing said speech recognizer to output the actuation signal to the respective vehicle actuator dependent on the classified magnitude of the detected vehicle speed.

The features and advantages of the speech recognition system for an automotive vehicle according to the present invention will be more clearly appreciated from the following description taken in conjunction with the accompanying drawings in which like reference numerals designate corresponding elements or sections throughout the drawings and in which;

Fig. 1 is a schematic block diagram of a typical speech recognizer for assistance in explaining the operations thereof;

Fig. 2 is a fragmentary schematic block diagram of a first embodiment of the speech recognition system for an automotive vehicle according to the present invention;

Fig. 3 is a circuit diagram of a first embodiment of a speed-dependent speech selection unit for use in the speech recognition system for an automotive vehicle according to the present invention:

Fig. 4 is a circuit diagram of a second embodiment of a speed-dependent speech selection unit for use in the speech recognition system for an automotive vehicle according to the present invention;

Fig. 5 is a schematic block diagram of a second embodiment of the speech recognition system for an automotive vehicle according to the present invention;

Fig. 6 is a circuit diagram of a third embodiment of a speed-dependet speech selection unit for use in the speech recognition system for an automotive vehicle according to the present invention;

Fig. 7 is a circuit diagram of a fourth embodiment of a speed-dependent speech selection unit for use in the speech recognition system for an automotive vehicle according to the present invention; and

Fig. 8 is a schematic block diagram of a third embodiment of the speech recognition system for an automotive vehicle according to the present invention.

# Detailed description of the preferred embodiments

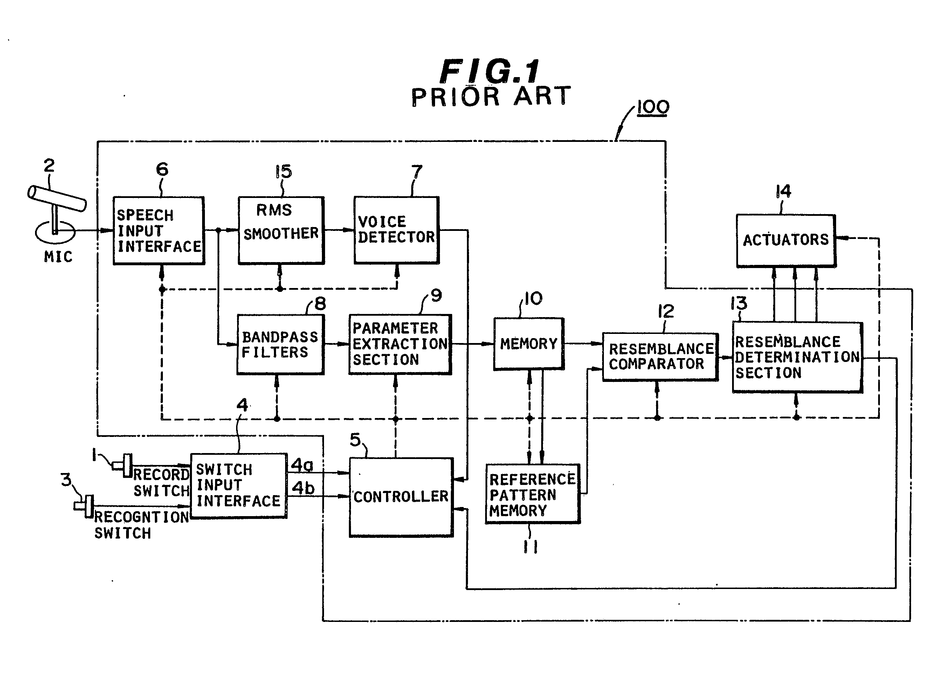

To facilitate understanding of the present invention, a brief reference will be made to the principle or operation of a typical prior-art speech recognizer, with reference to Fig. 1.

Fig. 1 shows a schematic block diagram of a typical speech recognizer 100. To use the speech recognizer, the user must first record a plurality of predetermined spoken instructions. Specifically, in this spoken instruction recording mode (reference mode), the user first depresses a record switch 1 disposed near the user. When the record switch 1 is depressed, a switch input interface 4 detects the depression of the record switch 2 and outputs a signal to a controller 5 via a wire 4a. In response to this signal, the controller 5 outputs a recording mode command signal to other sections for presetting the entire speech recognizer in the recording mode. In the spoken instruction recording mode, when the user says a phrase to be used as a spoken instruction, such as "open doors", near a microphone 2, the spoken phrase is transduced into corresponding electric signals through the microphone 2, amplified through a speech input interface 6, smoothed through a root-mean-square (RMS) smoother 15, and finally inputted to a voice detector 7. This voice detector 7 detects whether or not the magnitude of the spoken phrase signals exceeds a predetermined level for a predetermined period of time (150 to 250 ms) in order to determine the start of the spoken phrase input signals and whether or not the magnitude of the signals drops below a predetermined level for a predetermined period of time in order to determine the end of the signals. Upon detection of the start of the signals, this voice detector 7 outputs another recording mode command signal to the controller 5. In response to this command signal, the controller 5 activates a group of bandpass filters 8, so that the spoken phrase signals from the microphone 2 are divided into a number of predetermined frequency bands. Given to a parameter extraction section 9, the frequency-divided spoken phrase signals are squared or rectified therein in order to obtain the voice power spectrum for each of the frequency bands and then converted into corresponding digitial time-series matrix-phonetic pattern data. These data are next stored into a memory unit 10. In this case, however, since the speech recognizer is set to the spoken instruction recording mode by the depression of the record switch 1, the time-series matrix-phonetic pattern data are transferred to a reference pattern memory unit 11 and stored therein as reference data for recognizing the speech instructions.

After having recorded the reference spoken instructions, the user can input speech instructions, for instance, such as "open doors", to the speech recognizer through the microphone 2 while depressing a recognition switch 3.

When this recognition switch 3 is depressed, the switch input interface 4 detects the depression of the recognition switch 3 and outputs a signal to the controller 5 via a wire 4b. In response to this signal, the controller 5 outputs a recognition mode command signal to other sections for presetting the entire speech recognizer in the recognition mode. In such spoken phrase recognition mode, when the user says an instruction phrase similar to the one recorded previously near the microphone 2 and when the voice detector 7 outputs a signal, the spoken instruction is transduced into corresponding electric signals through the microphone 2, amplified through the speech input interface 6, filtered and divided into voice power spectrum for each of the frequency bands through the band pass filters 8, squared or rectified and further converted into corresponding digital time-series matrix-phonetic pattern data through the parameter extraction section 9, and then stored in the memory unit 10, in the same manner as in the recording mode.

Next, the time-series matrix-phonetic pattern data stored in the memory unit 10 in the recognition mode are sequentially compared with the time-series matrix-phonetic pattern data stored in the reference pattern memory unit 11 in the recording mode by a resemblance comparator 12. The resemblance comparator 12 calculates the resemblance rate of the inputted speech instruction to the reference speech instruction after time normalization and level normalization for compensating for variable speaking rate (because the same person speaks fast and loudly at one time but slow and whisperingly at the other time). The resemblance rate is usually obtained by calculating Tchebycheff distance between recognition-mode time-series matrix-phonetic pattern data and recording mode time-series matrix-phonetic pattern data. The resemblance rate calculated by the resemblance comparator 12 is next given to a resemblance determination section 13 to determine whether or not the calculated values lie within a predetermined range, that is, to evaluate their cross-correlation. If within the range, a command signal, indicating that a recognition-mode spoken instruction having adequate resemblance to one of the recorded instruction phrases, is outputted to one of actuators 14, for instance, in order to open the vehicle doors. Further, the above-mentioned operations are all executed in accordance with command signals outputted from the controller 5.

Description has been made hereinabove of the case where various discrete elements or sections are used for the speech recognizer 100; however, it is of course possible to realize the speech recognizer 100 by the use of a microcomputer including a central processing unit, a read-only memory, a random-access memory, a clock oscillator, etc. In such case, the voice detector 7 the parameter extraction section 9, the memory 10, the reference pattern memory 11, the resemblance comparator 12 and the resemblance determination section 13 can be all incorporated within the microcomputer, executing the same or similar processing, calculation or operations as already explained hereinabove.

Additionallly, the Tchebycheff distance is defined as follows:

In the case where the number of the bandpass filters is four and the number of time-series data for each is 32, the digital recording-mode time series matrix phonetic pattern data can be expressed as

$$F(A) = f(i, j) = \begin{vmatrix} f(1,1), & f(1,2) & f(1,3) & ..., & f(1,32) \\ f(2,1), & f(2,2), & f(2,3) & ..., & f(2,32) \\ f(3,1), & f(3,2), & f(3,3) & ..., & f(3,32) \\ f(4,1), & f(4,2), & f(4,3) & ..., & f(4,32) \end{vmatrix}$$

where A designates a first recording-mode speech instruction (reference) (e.g. Open Doors), i denotes the filter index, and j denotes time-series data index.

Here, if a first recognition-mode speech instruction (e.g. Open Doors) is indicated as B, the Tchebycheff distance can be obtained from the following expression:

$$l = | F(A) - F(B) | = \sum_{i=1}^{4} \sum_{j=1}^{32} | f^A(i, j) - f^B(i, j) |$$

In views of the above description and with reference to the attached drawings, the embodiments of the speech recognition system for an automotive vehicle according to the present invention will be described hereinbelow.

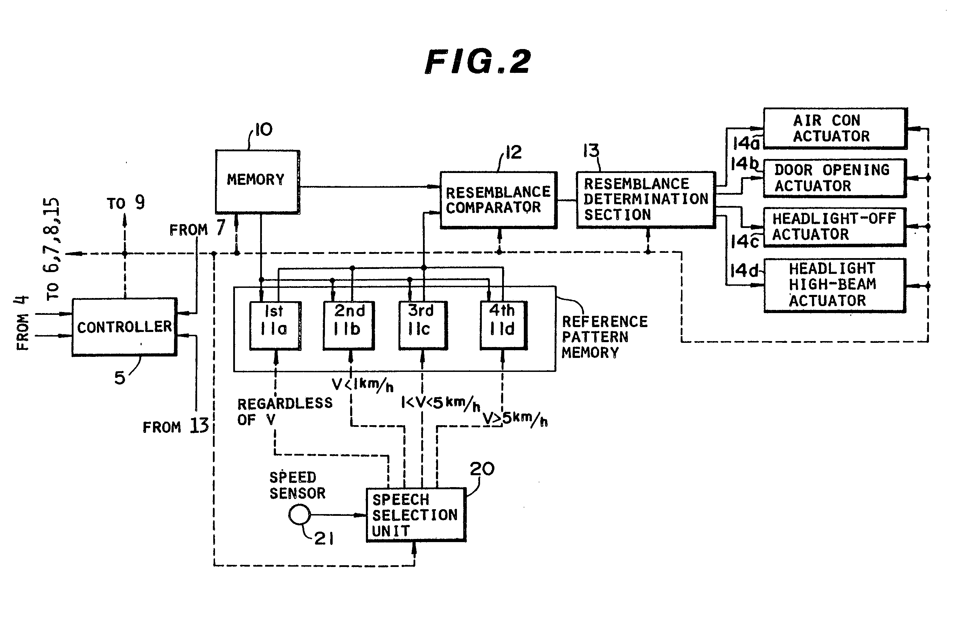

Fig. 2 shows a fragmentary schematic block diagram of a first embodiment of the speech recognition system according to the present invention.

In the figure, the reference numeral 20 denotes a speed-dependent speech selection unit for enabling or suppressing the reference matrix-phonetic pattern data according to vehicle speed and the reference numeral 21 denotes a vehicle sensor for electrically, magnetically or optically detecting vehicle speed and outputting digital signals corresponding thereto. Furthermore, in this embodiment, the reference pattern memory 11 includes a plurality of reference pattern memory units 11a, 11b, 11c, and 11d one for each instruction phrase. For instance, the time-series matrix-phonetic pattern data corresponding to "Air conditioner on" are stored in the unit 11a.

In brief summation of this embodiment, the command signal from the controller 5 is selectively applied to the respective reference pattern memory units 11a to 11d via the speech selection unit 20 according to the detected vehicle speed in order to control the speech recognition functions of the speech recognition system.

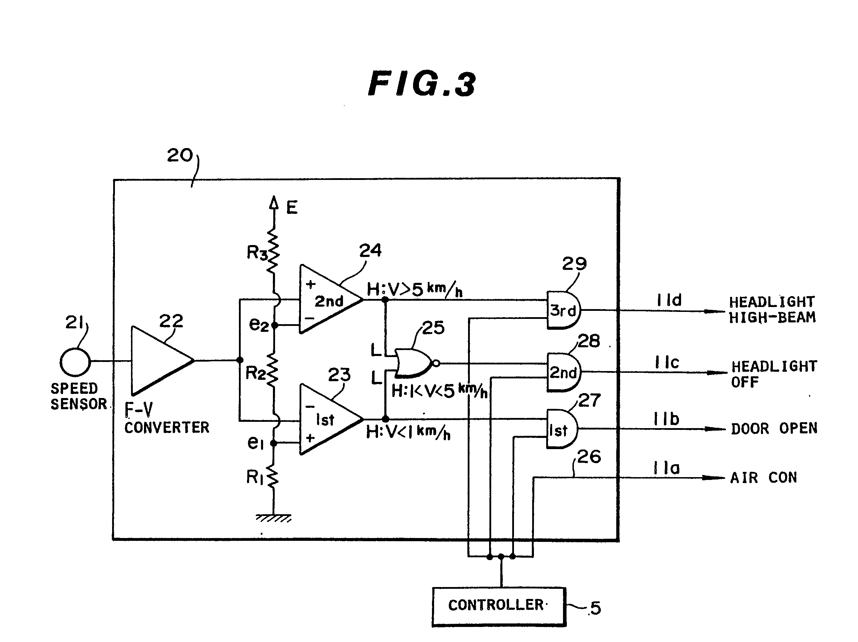

Fig. 3 shows a first embodiment of the circuit configuration of the speech selection unit 20. In the figure, the reference numeral 22 denotes a frequency-voltage converter (F-V converter) for converting digital pulse signals from the vehicle sensor 21 into the corresponding analog voltage signals. The reference numerals 23 and 24 denote two comparators. The plus input terminal of the first comparator 23 is connected to an intermediate point of serially-connected voltage division resistors to receive a reference voltage $e_1$ and the minus input terminal of the first comparator 23 is connected to the F-V converter 22. On the other hand, the plus input terminal of the second comparator 24 is connected to the F-V converter 22 and the minus input terminal of the second comparator 24 is connected to another intermediate point of serially-connected voltage division resistors to receive another reference voltage $e_2$. The reference numeral 25 denotes a NOR gate, two input terminals of which are connected to the output terminals of the comparators 23 and 24, respectively. The reference numerals 27, 28 and 29 denote three AND gates, one of the two input terminals of each of which is connected to the output terminal of one of the comparators 23 or 24 or the NOR gate 25 and the other of two input terminals of all of which is connected to the controller 5. Further, the reference numeral 26 denotes a wire for directly connecting the first reference pattern memory unit 11a to the controller 5.

Now, follows the operation of this speech selection unit. Since the frequency of the pulse signals detected by the speed sensor 21 is proportional to vehicle speed, it is possible to obtain analog voltages, the level of which is proportional to the vehicle speeds by converting the pulse signals into the corresponding voltage signals via the F-V converter 22. These voltage signals are next compared with two reference voltages $e_1$ and $e_2$ by the two comparators 23 and 24, respectively. A first reference voltage $e_1$ corresponding to a vehicle speed of, for instance, 1 km/h can be determined by $E(R_1/R_1+R_2+R_3)$; while a second reference voltage $e_2$ corresponding to a vehicle speed of, for instance, 5 km/h can be determined by $E(R_1+R_2/R_1+R_2+R_3)$. Therefore, when vehicle speed drops below 1 km/h, the first comparator 23 outputs a H-voltage level signal; when vehicle speed rises beyond 5 km/h, the second comparator 24 outputs a H-voltage level signal; when vehicle speed lies between 1 to 5 km/h, the NOR gate 25 outputs a H-voltage level signal.

On the other hand, when a spoken instruction is inputted to the speech recognition system in the recognition mode, since the controller 5 always outputs a H-voltage level command signal to the speech selection unit 20, this command signal is applied from the controller 5 to one of the input terminals of the respective AND gates 27, 28 and 29. Therefore, in response to the command signal, one of the AND gates 27, 28 or 29 associated with the current vehicle speed will outputs a H-voltage level signal, so that the time-series matrix-phonetic pattern data stored in the respective reference pattern memory unit 11a,

and one of 11b, 11c and 11d are transferred to the resemblance comparator 12 for comparison of the reference pattern data with those of an inputted spoken instruction.

After the resemblance rate is calculated by the comparator 12, the actuator corresponding thereto is activated in response to the signal from the resemblance determination section 13.

To explain more concretely, since spoken instructions such as "Air conditioner on", "Radio on" and "Channel 1" are stored in the first reference pattern memory unit 11 (a), these instructions can be transferred to the resemblance comparator 12 regardless of the vehicle speed. Further, since spoken instructions such as "Door open" and "Trunk lid open" are stored in the second reference pattern memory unit 11b, these instructions can be transferred only when the vehicle speed is less than 1 km/h. Further, since spoken instructions such as "Headlight off" are stored in the third reference memory unit 11c, these instructions can be transferred only while the vehicle is moving at a speed between 1 and 5 km/h. Finally, since spoken instructions such as "Headlight highbeam" are stored in the fourth reference pattern memory unit 11d, these instructions can be transferred only while the vehicle is moving at a speed of more than 5 km/h.

In this embodiment, an analog signal representative of vehicle speed is compared with reference analog signals; however, it is of course possible to compare a digital signal representative of vehicle speed with the reference digital signal to eliminate the need for the F-V converter 22. In this case, the number of pulses counted in a predetermined period of time would be directly compared with a reference value.

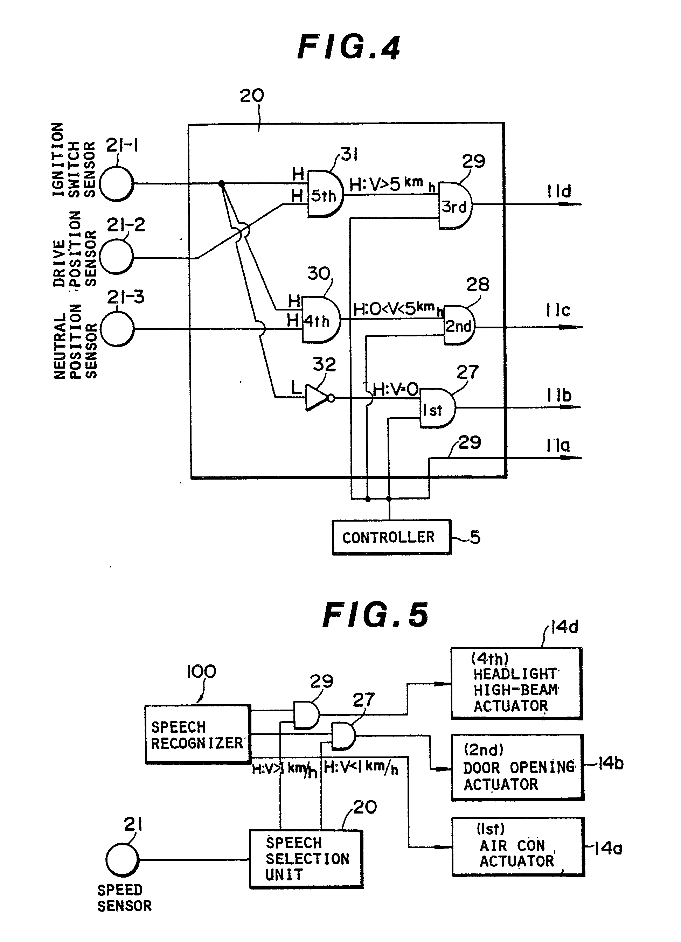

Fig. 4 shows a second embodiment of the circuit configuration of the speech selection unit 20. In the figure, the reference numeral 21-1 denotes an ignition switch sensor for outputting a H-voltage level signal when an ignition switch is turned on, the reference numeral 21-2 denotes a drive position sensor for outputting a H-voltage level signal when the gear shift of a transmission system is shifted into any of the 1st DRIVE, 2nd DRIVE, and REAR positions, that is, when the vehicle is travelling frontward or backward; the reference numeral 21-3 denotes a neutral position sensor for outputting a H-voltage level signal when the gear shift is in NEUTRAL position. The reference numerals 30 and 31 denote a fourth AND gate and a fifth AND gate, respectively. The reference numeral 32 denotes an inverter.

Two input terminals of the fourth AND gate 30 are connected to the ignition switch sensor 21-1 and the neutral position sensor 21-3, respectively. Therefore, when the ignition switch is turned on and further the gear shift is shifted into the neutral position, since two input terminals of the fourth AND gate 30 are both at a H-voltage level, the fourth AND gate 30 outputs a H-voltage level signal indicating that the vehicle is travelling at a speed less than, for instance, five km/hour.

Two input terminals of the fifth AND gate 31 are connected to the ignition switch sensor 21-1 and the drive position sensor 21-2. Therefore, when the ignition switch is turned on and the gear shift is in the drive position since two input terminals of the fifth AND gate 31 are both at a H-voltage level, the fifth AND gate 31 outputs a H-voltage level signal indicating that the vehicle is travelling at a speed of more than, for instance, five km/hour.

The input terminal of the inverter 32 is connected to the ignition switch sensor 21-2. Therefore, when the ignition switch is turned off, the output terminal of the inverter 32 is at a H-voltage level signal indicating that the vehicle speed is zero.

The operation of the AND gates 27, 28, and 29 is the same as in Fig. 3, and therefore the description thereof will be omitted.

Fig. 5 shows a schematic block diagram of a second embodiment according to the present invention. In this embodiment, the speed-dependent speech selection unit 20 including a first AND gate 27 and a third AND gate 29 is connected between the speech recognizer 100 and a plurality of vehicle actuators 14. That is to say, the vehicle speed is sensed by the speed sensor 21 and the sensed vehicle speeds are classified into appropriate groups (in this embodiment, more or less than one meter per second) by the speech selection unit 20. Therefore, only when the vehicle speed is less than one meter per second, actuator 14b for opening vehicle doors can be activated through the AND gate 27; only when the vehicle speed is more than one meter per second, the actuator 14d for switching headlights into the high-beam condition can be activated through the AND gate 29; the actuator 14a for turning on an air conditioner can be activated, regardless of the vehicle speed.

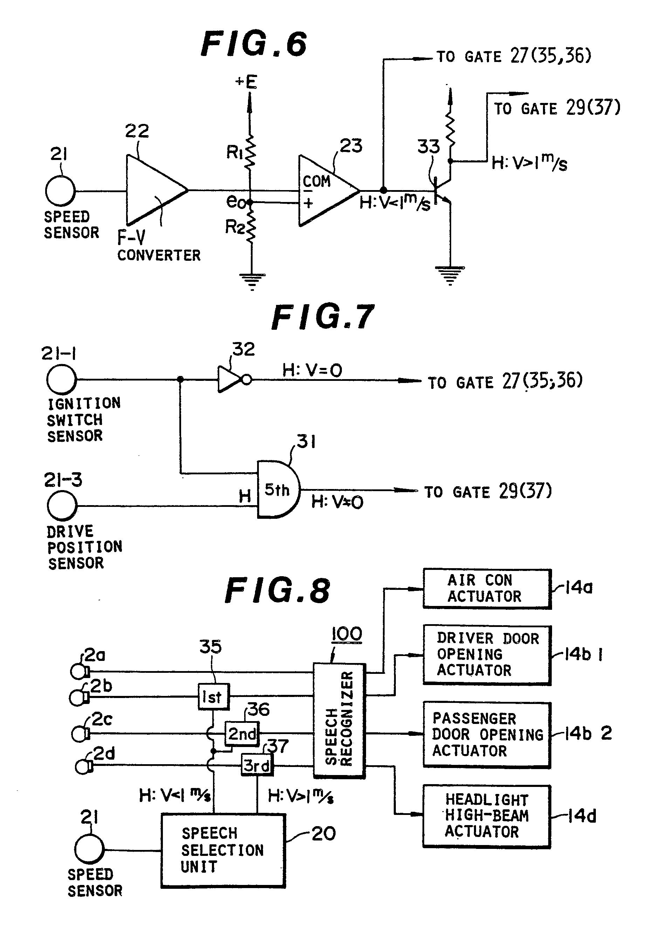

Fig. 6 shows a first embodiment of the circuit configuration of the speed-dependent speech selection unit 20 excluding the AND gates 27 and 29. In the figure, the reference numeral 21 denotes a speed sensor for detecting vehicle speeds in the form of pulse signals the number of pulse signals per unit time of which is proportional to vehicle speed. The reference numeral 22 denotes a frequency-voltage converter for converting the detected pulse signals from the vehicle sensor 21 into the corresponding voltage signals. The reference numeral 23 denotes a comparator, the minus input terminal of which is connected to the F-V converter 22 and the plus input terminal of which is connected to the point of junction of two serially-connected voltage division resistors $R_1$ and $R_2$ in order to receive a reference voltage. The reference numeral 33 denotes a transistor serving as an inverter. Returning to Fig. 5, the reference numeral 27 and 29 denote two AND gates one input terminal of each of which is connected to the speech recognizer 100 and the respective other input terminal of each of which is connected to the comparator 23 or the transistor 33, respectively.

Now, follows the operation of this speech selection unit. Since the frequency of the pulse signals from the speed sensor 21 is proportional to vehicle speed, a voltage proportional to vehicle speed is outputted by the F-V converter 22. The voltage signal is next compared with the reference voltage $e_0$ by the comparator 23. The reference voltage $e_0$ corresponding to a vehicle speed of, for instance, one meter per second can be determined by $E(R_2/R_1+R_2)$. Therefore, when vehicle speed is less than one meter per second, the comparator 23 outputs a H-voltage level signal to one input terminal of the AND gate 27.

On the other hand, when a correct spoken instruction is inputted to the speech recognizer 100 in recognition mode, the recognizer 100 outputs a H-voltage level command signal to the AND gate 27 in response thereto. Therefore, an ANDed output signal is given to the second actuator 14b to drive, for instance, a mechanism to open the vehicle doors. Also, in this case, since the transistor 33 is on, the collector terminal thereof is at a L-voltage level, so that the AND gate 29 is not activated.

Similarly, when vehicle speed is more than one meter per second, since the comparator 23 outputs a L-voltage level signal, the transistor 33 will be off, therefore the collector terminal thereof will be at a H-voltage level. Thus, when a command signal is applied to the AND gate 29, it outputs an activating signal to the fourth actuator 14d to drive, for instance, a dimmer switch to switch a headlight into high-beam condition.

In addition, as shown in Fig. 5, since the first actuator 14a for driving, for instance, a switch to operate an air conditioner is directly connected to the speech recognizer 100, the first actuator 14a can be activated regardless of the vehicle speed.

Fig. 7 shows a second embodiment of the circuit configuration of the speech selection unit 20 excluding the AND gates 27 and 29. In the figure, the reference numeral 21-1 denotes an ignition switch sensor which outputs a H-voltage level signal when an ignition switch is turned on and a L-voltage level signal when turned off. The reference numeral 21-3 denotes a drive position sensor which outputs a H-voltage level signal when the gear shift of a transmission system is in any of the 1st DRIVE, 2nd DRIVE, and REVERSE positions, that is, when the vehicle is travelling frontward or backward and a L-voltage level signal when the gear shift is in any of the above.

The reference numeral 32 denotes an inverter and 31 denotes a fifth AND gate.

Since the input terminal of the inverter 32 is connected to the ignition switch sensor 21-1, when the ignition switch is turned off, the output terminal thereof is at a H-voltage level indicating that the vehicle speed is zero.

Since the two input terminals of the AND gate 31 are connected to the ignition switch sensor 21-1 and the drive position sensor 21-3, when the ignition switch is turned on and the gear shift is in one of the driving positions, the AND gate 31 outputs a H-voltage level signal indicating that the vehicle is travelling.

The operations of the AND gates 27 and 29 are the same as in Fig. 5, therefore the description thereof will be omitted.

Fig. 8 shows a schematic block diagram of a third embodiment according to the present invention. In this embodiment, the speed-dependent speech selection unit 20 including three analog switches is connected between a plurality of microphones and the speech recognizer 100. In the figure, the reference numerals 2a, 2b, 2c and 2d denote a plurality of microphones through which a plurality of spoken instructions are inputted in recognition mode to the speech recognizer 100. The reference numerals 35, 36 and 37 denote analog switches which connect or disconnect the spoken instruction signals to or from the speech recognizer 100 in response to signals from the speech selection unit 20, such as is shown in Fig. 6.

Since a H-voltage level signal indicating that vehicle speed is less than one meter per second is applied from the comparator 23 (shown in Fig. 6) to the analog switches 35 and 36, only when the vehicle speed is less than one meter per second, the analog switches 35 and 36 are closed, so that a specific set of spoken instructions, for instance, such as "Driver-side door open", can be inputted to the speech recognizer through the microphone 2b disposed on the inside surface of a driver-side door and similarly a different spoken instruction, for instance, such as "Passenger-side door open", can be inputted to the speech recognizer through the microphone 2c disposed on the inside surface of a passenger-side door.

On the other hand, since a H-voltage level signal indicating that the vehicle speed is more than one meter per second is inputted from the collector of the transistor 33 (shown in Fig. 6) to the analog switch 37, only when the vehicle speed is more than one meter per second, the analog switch 37 is closed, so that a spoken instruction, for instance, such as "Headlight high-beam", can be inputted to the speech recognizer 100 through the microphone 2d disposed at the central portion of a steering wheel.

Since the microphone 2a is directly connected to the speech recognizer 100, a spoken instruction, for instance, such as "Air conditioner on", can be inputted to the speech recognizer 100 regardless of vehicle speed.

Although various embodiments of the speed-dependent speech selection units has been described hereinabove by using various discrete elements or sections, it is of course possible to incorporate the same functions within the microcomputer of the speech recognizer 100 as already explained.

As described above, in the speech recognition system for an automotive vehicle according to the present invention, a plurality of vehicle actuators for conducting some necessary functions in an automotive vehicle can selectively be activated according to vehicle speed. Thus it is possible to reduce the number of reference matrix-phonetic pattern data for each classified vehicle speed, thus improving reliability of recognition performance. Furthermore, it is possible to avert dangerous conditions, such as the vehicle dorrs opening while the vehicle is travelling, thus allowing more safe operation.

**Claims**

1. A speech recognition system for an automotive vehicle for outputting a plurality of actuation signals to a plurality of vehicle actuators (14) for actuation thereof in accordance with spoken instructions, including:
—a microphone (2) for transducing spoken instructions into electric signals and outputting signals corresponding thereto:
—a speech recognizer (100) having a controller (5), reference pattern memory units (11), and a resemblance comparator (12), said recognizer being responsive to said microphone (2) for outputting the actuation signal to the vehicle actuators (14), respectively, when the transduced signal resembles one of reference pattern data stored each in said reference pattern memory units (11),
characterized by:
(a) vehicle speed dectecting means (21) for detecting the vehicle speed and outputting signals corresponding thereto; and
(b) a speech selecting means (20) responsive to the vehicle speed signals for classifying the detected vehicle speed by signal magnitude and selectively allowing said speech recognizer (100) to output the actuation signal to the respective vehicle actuator dependent on the classified magnitude of the detected vehicle speed.

2. A speech recognition system for an automotive vehicle as set forth in claim 1, wherein said speed-dependent speech selecting means (20) is connected between said controller (5) and said reference pattern memory units (11) for selectively allowing a command signal to pass from said controller to said respective reference pattern memory units (11) therethrough, according to the magnitude classification of the detected vehicle speed.

3. A speech recognition system for an automotive vehicle as set forth in claim 1, wherein said speed-dependent speech selecting means (20) is connected between said speech recognizer (100) and the actuators (14) for selectively allowing an actuation signal to pass from said speech recognizer to said respective actuator therethrough, according to the classified magnitude of the detected vehicle speed.

4. A speech recognition system for an automotive vehicle as set forth in claim 1, wherein said speed-dependent speech selecting means (20) is connected between said microphone (2) and said speech recognizer (100) for selectively allowing signals transduced by said microphone

to pass to said speech recognizer therethrough, according to the magnitude classification of the detected vehicle speed.

5. A speech recognition system for an automotive vehicle as set forth in claim 2, wherein said vehicle speed detecting means (21) is a speed sensor for generating pulse signals, the frequency of which is proportional the vehicle speed, and said speed-dependent speech selecting means (20) comprises:
(a) a frequency-voltage converter (F-V converter) (22) connected to said speed sensor (21) for converting the pulse frequency from said speed sensor (21) into a voltage signal representative of vehicle speed and outputting signals corresponding thereto:
(b) a first comparator (23), the minus input terminal of which is connected to said F-V converter (22) and to the plus input terminal of which a lower reference voltage $e_1$ indicative of a lower reference vehicle speed is applied, said first comparator (23) comparing the two input signals and outputting a H-voltage level signal when the voltage signal from said F-V converter (22) drops below the lower reference voltage;
(c) a second comparator (24), the plus input terminal of which is connected to said F-V converter (22) and to the minus input terminal of which a higher reference voltage $e_2$ indicative of a higher reference vehicle speed is applied, said second comparator (24) comparing the two input signals and outputting a H-voltage level signal when the voltage signal from said F-V converter (22) exceeds the higher reference voltage;
(d) a NOR gate (25), two input terminals of which are connected to said first and second comparators (23, 24) for NORing the two input signals and outputting a H-voltage level signal when the voltage signal from said F-V converter (22) lies between the higher and lower reference voltages;
(e) said controller (5) being directly connected to a first reference pattern memory unit (11a) to transfer the reference pattern data in said first reference pattern memory unit to said resemblance comparator (12), regardless of vehicle speed, said controller outputting a H-voltage level signal when any one of the spoken instructions is inputted to said microphone;
(f) a first AND gate (27), one input terminal of which is connected to said first comparator and the other input terminal of which is connected to said controller for ANDing the two input signals and outputting a H-voltage level signal to a second reference pattern memory unit (11b) to transfer the reference pattern data in said second reference pattern memory unit to said resemblance comparator (12) when both said first comparator and said controller output a H-voltage level signal, respectively, that is, when the vehicle speed drops below the lower reference vehicle speed and any one of the spoken instructions is inputted to said microphone;
(g) a second AND gate (28), one input terminal of which is connected to said NOR gate (25) and the other input terminal of which is connected to said controller for ANDing the two input signals and outputting a H-voltage level signal to a third reference pattern memory unit (11c) to transfer the reference pattern data in said third reference pattern memory unit (11c) to said resemblance comparator (12) when both said NOR gate (25) and said controller (5) output a high-voltage level signal, respectively, that is, when the vehicle speed lies between the lower and higher reference vehicle speed and any one of the spoken instructions is inputted to said microphone (2), and

(h) a third AND gate (29), one input terminal of which is connected to said second comparator (24) and the other input terminal of which is connected to said controller (5) for ANDing the two input signals and outputting a H-voltage level signal to a fourth reference pattern memory unit (11d) to transfer the reference pattern data in said fourth pattern memory unit (11d) to said resemblance comparator (12) when said second comparator (24) and said controller (5) output a H-voltage level signal, respectively, that is, when the vehicle speed rises beyond the higher reference vehicle speed and any one of the spoken instructions is inputted to said microphone (2).

6. A speech recognition system for an automotive vehicle as set forth in claim 2, wherein one said vehicle detecting means (21) include an ignition switch sensor (21-1) for outputting a H-voltage level signal when an ignition switch is turned on, a drive position sensor (21-2) for outputting a H-voltage level signal when a transmission system is shifted into any of 1st DRIVE, 2nd DRIVE and REVERSE positions, and a neutral position sensor (21-3) for outputting a H-voltage level signal when a transmission system is shifted into NEUTRAL position, and said speed-dependent speech selecting means (20) comprises:

(a) an inverter (32), the input terminal of which is connected to said ignition switch sensor (21-1) for inverting the input signal and outputting a H-voltage level signal when the ignition switch is turned off;

(b) a fourth AND gate (30), one input terminal of which is connected to said ignition switch sensor (21-1) and the other input terminal of which is connected to said neutral position sensor (21-3) for ANDing the two input signals and for outputting a H-voltage level signal when the ignition switch is turned on and the transmission system is shifted into the NEUTRAL position;

(c) a fifth AND gate (31), one input terminal of which is connected to said ignition switch sensor (21-1) and the other input terminal of which is connected to said drive position sensor (21-2) for ANDing the two input signals and outputting a H-voltage level signal when the ignition switch is turned on and the transmission system is shifted into any of 1st DRIVE, 2nd DRIVE and REVERSE positions;

(d) said controller (5) being directly connected to a first reference pattern memory unit (11a) to transfer the reference pattern data in said first reference pattern memory unit (11) to said resemblance comparator (12), regardless of vehicle speed, said controller (5) outputting a H-voltage level signal when any one of the spoken instructions is inputted to said microphone (2);

(e) a first AND gate (27), one input terminal of which is connected to said inverter (32) and the other input terminal of which is to said controller (5) for ANDing the two input signals and outputting a H-voltage level signal to a second reference pattern memory unit (11b) to transfer the reference pattern data in said second reference pattern memory unit (11b) to said resemblance comparator (12) when said inverter (32) and said controller (5) output a H-voltage level signal, respectively, that is, when the ignition switch is off and any of the spoken insructions is inputted to said microphone;

(f) a second AND gate (28), one input terminal of which is connected to said fourth AND gate (30) and the other input terminal of which is connected to said controller for ANDing the two input signals and outputting a H-voltage level signal to a third reference pattern memory unit (11c) to transfer the reference pattern data in said third reference pattern memory unit (11c) to said resemblance comparator (12) when the ignition switch is turned on, the transmission system is shifted into NEUTRAL position and any one of the spoken instructions is inputted to said microphone (2); and

(g) a third AND gate (29), one input terminal of which is connected to said fifth AND gate (31) and the other input terminal of which is connected to said drive position sensor (21-2) for ANDing the two input signals and outputting a H-voltage level signal to a fourth reference pattern memory unit (11d) to transfer the reference matrix-phonetic pattern data in said fourth pattern memory unit (11d) to said resemblance comparator (12) when said ignition switch is turned on, the transmission system is shifted into any of 1st DRIVE, 2nd DRIVE and REVERSE postions, and any one of the spoken instructions is inputted to said micorphone (2).

7. A speed recognition system for an automotive vehicle as set forth in claim 3, wherein said vehicle speed detecting means (21) is a speed sensor for generating pulse signals, the frequency of which is proportional to vehicle speed and said speed-dependent speech selecting means (20) comprises:

(a) a frequency-voltage converter (F-V converter) (22) connected to said speed sensor for converting the pulse frequency from said speed sensor into a voltage signal representative of vehicle speed and outputting signals corresponding thereto;

(b) a comparator (23) the minus input terminal of which is connected to said F-V converter (22) and to the plus input terminal of which a reference voltage $e_0$ indicative of a reference vehicle speed is applied, said comparator (23) comparing the two input signals thereof and outputting a H-voltage level signal when the voltage signal from said F-V converter drops below the reference voltage;

(c) a transistor (33) the base terminal of which is connected to said comparator (23) and the emitter terminal of which is grounded for inverting the voltage signal from said comparator (23) at the collector terminal thereof;

(d) said speech recognizer (100) being directly connected to a first actuator (14a) for activating said first actuator (14a), regardless of the vehicle speed, when said speech recognizer (100) outputs a H-voltage level signal, that is, when a spoken instruction corresponding to said first actuator (14a) is inputted to said microphone (2);

(e) a first AND gate (27), one input terminal of which is connected to said comparator (23) and the other input terminal of which is connected to said speed recognizer (100) for ANDing the two input signals and for outputting a signal to a second actuator (14b) to activate said second actuator (14b) when both said comparator (23) and said speech recognizer (100) output a H-voltage level signal, respectively that is, when the vehicle speed drops below the reference vehicle speed and a spoken instruction corresponding to said second actuator (14b) is inputted to said microphone (2); and

(f) a third AND gate (29), one input terminal of which is connected to said speed recognizer (100) and the other input terminal of which is connected to the collector terminal of said transistor (33) for ANDing the two input signals thereof and outputting a H-voltage level signal to a fourth actuator (14d) to activate said fourth actuator when both said transistor (33) and said speech recognizer (100) output a H-voltage level signal, respectively, that is, when the vehicle speed rises beyond the reference vehicle speed and a spoken instruction corresponding to said fourth actuator is inputted to said microphone (2).

8. A speech recognition system for an automotive vehicle as set forth in claim 3, wherein said vehicle speed detecting means (21) include an ingition switch sensor (21-1) for outputting a H-voltage level signal when an ignition switch is turned on and drive position sensor (21-3) for outputting a H-voltage level signal when a transmission system is in any of positions 1st DRIVE, 2nd DRIVE and REVERSE positions, and said speed-dependent speech selecting means (20) comprises:

(a) an inverter (32), the input terminal of which is connected to said ignition switch for inverting the input signal thereof and outputting a H-voltage level signal when the ignition switch is turned off;

(b) a fifth AND gate (31), one input terminal of which is connected to said ignition switch sensor (21-1) and the other input terminal of which is connected to said drive position sensor (21-3) for ANDing the two input signals thereof and outputting a H-voltage level signal when the ignition switch is turned on and the transmission system is shifted into any of 1st DRIVE, 2nd DRIVE and REVERSE positions;

(c) said speech recognizer (100) being directly connected to a first actuator (14a) for activating said first actuator, regardless of vehicle speed, when said speech recognizer outputs a H-voltage level signal, that is, when a spoken instruction corresponding to said first actuator is inputted to said microphone (2);

(d) a first AND gate (27), one input terminal of which is connected to said inverter (32) and the other input terminal of which is connected to said speech recognizer (100) for ANDing the two input signals and for outputting a signal to a second actuator (14b) to activate said second actuator (14b) when said inverter (32) and said speech recognizer (100) output a H-voltage level signal, respectively, that is, when the vehicle speed is zero and a spoken instruction corresponding to said second actuator is inputted to said microphone (2); and

(e) a third AND gate (29), one input terminal of which is connected to said speech recognizer (100) and the other input terminal of which is connected to said fifth AND gate (31) for ANDing the two input signals thereof and outputting a H-voltage level signal to a fourth actuator (14d) to activate said fourth actuator (14d) when both said fifth AND gate (31) and said Speech recognizer (100) outputs a H-voltage level signal, respectively, that is, when the vehicle speed is not zero and a spoken instruction corresponding to said fourth actuator is inputted to said microphone (2).

9. A speech recognition system for an automotive vehicle as set forth in claim 4, wherein said vehicle speed detecting means (21) is a speed sensor for generating pulse signals the frequency of which is proportional to the vehicle speed and said speed-dependent speech selecting means (20) comprises:

(a) a frequency-voltage converter (F-V converter) (22) connected to said speed sensor for converting the pulse frequency from said speed sensor into a voltage signal representative of the vehicle speed and outputting signals corresponding thereto;

(b) a comparator (23), the minus input terminals of which is connected to said F-V converter (22) and to the plus input terminal of which a reference voltage $e_0$ indicative of a reference vehicle speed is applied, said comparator (23) comparing the two input signals thereof and outputting a H-voltage level signal when the voltage signal from said F-V converter (22) drops below the reference voltage;

(c) a transistor (33) the base terminal of which is connected to said comparator (23) and the emitter terminal of which is grounded for inverting the voltage signal from said comparator (23) at the collector terminal thereof;

(d) a first microphone (2a) being directly connected to said speech recognizer (100) to transmit spoken instruction electric signals transduced by said first microphone (2a) to said speech recognizer (100) regardless of vehicle speed;

(e) a first analog switch (35) connected between a second microphone (2b) and said speech recognizer (100), the control terminal of which is connected to said comparator (23), said first analog switch (35) being turned on to transmit spoken instruction electric signals transduced by said second microphone (26) to said speech recognizer (100) in response to a H-voltage level signal from said comparator (23), that is, when the vehicle speed drops below the reference vehicle speed; and

(f) a third analog switch (37) connected between a third microphone (2d) and said speech recognizer (100), the control terminal of which is connected to the collector terminal of said transistor (33), said third analog switch (37) being turned on to transmit spoken instruction electric signals transduced by said third microphone (2d) to said speech recognizer in response to a H-voltage level signal from said transistor (33), that is, when the vehicle speed rises beyond the reference vehicle speed.

10. A speech recognition system for an automotive vehicle as set forth in claim 4, wherein said vehicle speed detecting means (21) include an ignition switch sensor (21-1) for outputting a H-voltage level signal when an ignition switch is turned on and a drive position sensor (21-3) for outputting a H-voltage level signal when a transmission system is shifted to any of 1st DRIVE, 2nd DRIVE and REVERSE positions, and said speed-dependent speech selection unit comprises:

(a) an inverter (32), the input terminal of which is connected to said ignition switch for inverting the input signal thereof and outputting a H-voltage level signal when the ignition switch is turned off;

(b) a fifth AND gate (31), one input terminal of which is connected to said ignition switch sensor (21-1) and the other input terminal of which is connected to said drive position sensor (21-3) for ANDing the two input signals thereof and outputting a H-voltage level signal when the ignition switch is turned on and the transmission system is shifted into any of 1st DRIVE, 2nd DRIVE and REVERSE positions:

(c) a first microphone (2a) being directly connected to said speech recognizer (100) to transmit spoken instruction electric signals transduced by said first microphone (2a) to said speech recognizer (100) regardless of vehicle speed;

(d) a first analog switch (35) connected between a second microphone (2b) and said speech recognizer (100), the control terminal of which is connected to said inverter (32), said first analog switch (35) being turned on to transmit spoken instruction electric signals transduced by said second microphone (2b) to said speech recognizer (100) in response to a H-voltage level signal from said inverter (32), that is, when the vehicle speed is zero; and

(e) a third analog switch (37) connected between a third microphone (2d) and said speech recognizer (100), the control terminal of which is connected to the collector terminal of said transistor (33), said third analog switch (37) being turned on to transmit spoken instruction electric signals transduced by said third microphone (2d) to said speech recognizer (100) in response to a H-voltage level signal from said transistor (33), that is, when the vehicle speed is not zero.

11. A speech recognition system for an automotive vehicle as set forth in either claim 5 or 6, wherein said first reference pattern memory unit (11a) stores reference matrix-phonetic pattern data for spoken instructions of "Air conditioner on/off", "Radio on/off", "Channel 1, 2, ...", and "Window open/close".

12. A Speech recognition system for an automotive vehicle as set forth in either claim 5 or 6, wherein said second reference pattern memory unit (11b) stores reference matrix-phonetic pattern data for spoken instructions of "Door open", and "Trunk lid open".

13. A speech recognition system for an automotive vehicle as set forth in either claim 5 or 6, wherein said third reference pattern memory unit (11c) stores reference matrix-phonetic pattern data for spoken instruction of "Headlight on/off".

14. A speech recognition system for an automotive vehicle as set forth in either claims 5 or 6, wherein said fourth reference pattern memory unit (11d) stores reference matrix-phonetic pattern data for spoken instruction of "Headlight high/low beam".

**Patentansprüche**

1. Spracherkennungssystem für ein Kraftfahrzeug zur Ausgabe einer Mehrzahl von Stellsignalen zur Ansteuerung einer Mehrzahl von Fahrzeugstellgliedern (14) in Übereinstimmung mit gesprochenen Befehlen, mit

—einem Mikrofon (2) zur Umwandlung gesprochener Befehle in elektrische Signale sowie zur Ausgabe entsprechender Signale, und

—einem Spracherkenner (100) mit einer Steuerung (5), Referenzmuster - Speichereinheiten (11), und mit einem Komparator (12) zur Feststellung von Ähnlichkeiten, wobei der Spracherkenner (100) auf Signale des Mikrofons (2) anspricht und jeweils ein Stellsignal zu einem Fahrzeugstellglied (14) liefert, wenn das umgewandelte Signal Referenzmusterdaten ähnelt, die jeweils in den Referenzmuster - Speichereinheiten (11) gespeichert sind, gekennzeichnet durch

(a) einen Fahrzeuggeschwindigkeitsdetektor (21) zur Ermittlung der Fahrzeuggeschwindigkeit sowie zur Ausgabe entsprechender Signale, und

(b) eine auf die Fahrzeuggeschwindigkeitssignale ansprechende Wähleinrichtung (20) zur Klassifizierung der detektierten Fahrzeuggeschwindigkeit durch die Signalgröße sowie zur selektiven Ansteuerung des Spracherkenners (100), derart, daß er das Stellsignal zum entsprechenden Fahrzeugstellglied in Abhängigkeit der klassifizierten Größe der detektierten Fahrzeuggeschwindigkeit ausgibt.

2. Spracherkennungssystem nach Anspruch 1, dadurch gekennzeichnet, daß die geschwindigkeitsabhängig arbeitende Wähleinrichtung (20) zwischen der Steuerung (5) und den Referenzmuster - Speichereinheiten (11) angeordnet ist, um selektiv ein Befehlssignal von der Steuerung (5) zu den jeweiligen Referenzmuster - Speichereinheiten (11) hindurchzulassen, und zwar in übereinstimmung mit der Großenklassifikation der detektierten Fahrzeuggeschwindigkeit.

3. Spracherkennungssystem nach Anspruch 1, dadurch gekennzeichnet, daß die geschwindigkeitsabhängig arbeitende Wähleinrichtung (20) zwischen dem Spracherkenner (100) und den Stellgliedern (14) angeordnet ist, um selektiv ein Stellsignal vom Spracherkenner (100) zu dem jeweiligen Stellglied (14) hindurchzulassen, und zwar in Übereinstimmung mit der klassifizierten Größe der detektierten Fahrzeuggeschwindigkeit.

4. Spracherkennungssystem nach Anspruch 1, dadurch gekennzeichnet, daß die geschwindigkeitsabhängig arbeitende Wähleinrichtung (20) zwischen dem Mikrofon (2) und dem Spracherkenner (100) angeordnet ist, um selektiv Signale, die durch das Mikrofon (2) umgewandelt worden sind, zum Spracherkenner (100) hindurchzulassen, und zwar in Übereinstimmung mit der Größenklassifikation der detektierten Fahrzeuggeschwindigkeit.

5. Spracherkennungssystem nach Anspruch 2, dadurch gekennzeichnet, daß der Fahrzeuggeschwindigkeitsdetektor (21) ein Geschwindigkeitssensor zur Erzeugung von Pulssignalen mit einer Frequenz proportional zur Fahrzeuggeschwindigkeit ist, und daß die geschwindigkeitsabhängig arbeitende Wähleinrichtung (20) folgende Einheiten enthält:

(a) einen mit dem Geschwindigkeitssensor (21) verbundenen Frequenz - Spannungswandler (22) (F-V Konverter) zur Umwandlung der Pulsfrequenz des Geschwindigkeitssensors (21) in ein die Fahrzeuggeschwindigkeit angebendes Spannungssignal, sowie zur Ausgabe entsprechender Signale,

(b) einen ersten Komparator (23), dessen Minuseingang mit dem F-V Konverter (22) verbunden ist, und der an seinem Pluseingang eine untere Referenzspannung ($e_1$) entsprechend einer unteren Referenzfahrzeuggeschwindigkeit empfängt, wobei der erste Komparator (23) die beiden Eingangssignale miteinander vergleicht und ein Spannungssignal mit H-Pegel ausgibt, wenn das Spannungssignal vom F-V konverter (22) unter die untere Referenzspannung ($e_1$) fällt,

(c) einen zweiten Komparator (24), dessen Pluseingang mit dem F-V Konverter (22) verbunden ist, und dessen Minuseingang eine höhere bzw. obere Referenzspannung ($e_2$) entsprechend einer oberen Referenzfahrzeuggeschwindigkeit empfängt, wobei der zweite Komparator (24) die beiden Eingangssignale miteinander vergleicht und ein Spannungssignal mit H-Pegel ausgibt, wenn das Spannungssignal vom F-V Konverter (22) die obere Referenzspannung ($e_2$) überschreitet,

(d) ein NOR-Glied (25), dessen einer Eingang mit dem ersten Komparator (23) und dessen anderer Eingang mit dem zweiten Komparator (24) verbunden sind, um eine NOR-Verknüpfung beider Eingangssignale durchführen und ein Spannungssignal Mit H-Pegel ausgeben zu können, wenn das Spannungssignal vom F-V Konverter (22) zwischen der oberen und der unteren Referenzspunnung liegt, (e) eine direkt mit einer ersten Referenzmuster - Speichereinheit (11a) verbundene Steuerung (5) zur Übertragung der Referenzmusterdaten in der ersten Referenzmuster - Speichereinheit (11a) zum Ähnlichkeiten feststellenden Komparator (12), und zwar unabhängig von der Fahrzeuggeschwindigkeit, wobei die Steuerung (5) ein Spannungssignal mit H-Pegel ausgibt, wenn irgendeiner der Befehle in das Mikrofon (2) gesprochen wird,

(f) ein erstes UND-Glied (27), dessen einer Eingang mit dem ersten Komparator (22) und dessen anderer Eingang mit der Steuerung (5) zur UND-Verknüpfung beider Eingangssignal sowie zur Ausgabe eines Spannungssignals mit H-Pegel zu einer zweiten Referenzmuster - Speichereinheit (11b) verbunden sind, um die Referenzmusterdaten in der zweiten Referenzmuster - Speichereinheit (11b) zu dem Ähnlichkeiten feststellenden Komparator (12) zu übertragen, wenn sowohl der erste Komparator (23) und die Steuerung (5) jeweils ein Spannungssignal mit H-Pegel ausgeben, wenn also die Fahrzeuggeschwindigkeit unter die untere Referenzfahrzeuggeschwindigkeit fällt und irgendeiner der Befehle in das Mikrofon (2) gesprochen wird,

(g) ein zweites UND-Glied (28), dessen einer Eingang mit dem NOR-Glied (25) und dessen anderer Eingang mit der Steuerung zur UND-Verknüpfung beider Eingangssignale und zur Ausgabe eines Spannungssignals mit H-Pegel zu einer dritten Referzmuster - Speichereinheit (11c) verbunden sind, um die Referenzmusterdaten in der dritten Referenzmuster - Speichereinheit (11c) zu dem Ähnlichkeiten feststellenden Komparator (12) zu übertragen, wenn sowohl das NOR-Glied (25) als auch die Steuerung (5) Spannungssignale mit H-Pegel liefern, wenn also die Fahrzeuggeschwindigkeit zwischen der unteren und der oberen Referenzfahrzeuggeschwindigkeit liegt und irgendeiner der Befehle in das Mikrofon (2) gesprochen wird, und

(h) ein drittes UND-Glied (29), dessen einer Eingang mit dem zweiten Komparator (24) und dessen anderer Eingang mit der Steuerung (5) zur UND - Verknüpfung beider Eingangssignale und zur Ausgabe eines Spannungssignals mit H-Pegel zu einer vierten Referenzmuster - Speichereinheit (11d) verbunden sind, um die Referenzmusterdaten in der vierten Referenzmuster - Speichereinheit (11d) zu dem Ähnlichkeiten feststellenden Komparator (12) zu übertragen, wenn der zweite Komparator (24) und die Steuerung (5) jeweils ein Spannungssignals mit H-Pegel ausgeben, wenn also die Fahrzeuggeschwindigkeit die obere Referenzfahrzeuggeschwindigkeit übersteigt und irgendeiner der Befehle in das Mikrofon (2) gesprochen wird.

6. Spracherkennungssystem nach Anspruch 2, dadurch gekennzeichnet, daß ein Fahrzeuggeschwindigkeitsdetektor (21) einen Zündschaltsensor (21-1) zur Ausgabe eines Spannungssignals mit H-Pegel aufweist, wenn ein Zündschalter eingeschaltet ist, einen Getriebepositionssensor (21-1) zur Ausgabe eines Spannungssignals mit H-Pegel umfaßt, wenn ein Getriebe sich im ersten, zweiten oder Rückwärtsgang befindet, und einen Leerlaufpositionssensor (21-3) zur Ausgabe eines Spannungssignals mit H-Pegel aufweist, wenn sich das Getriebe in der neutralen Stellung befindet, und daß die geschwindigkeitsabhängig arbeitende Wähleinrichtung (20) folgende Einheiten enthält:

(a) einen Inverter (32), dessen Eingang mit dem Zündschaltsensor (21-1) zur Invertierung des Eingangssignals verbunden ist, wobei der Inverter (32) ein Spannungssignal mit H-Pegel ausgibt, wenn der Zündschalter ausgeschaltet ist,

(b) ein viertes UND-Glied (30), dessen einer Eingang mit dem Zündschaltsensor (21-1) und dessen anderer Eingang mit dem Leerlaufpositionssensor (21-3) zur Durchführung einer UND - Verknüpfung beider Eingangssignale und zur Ausgabe eines Spannungssignals mit H-Pegel verbunden sind, wenn der Zündschalter eingeschaltet ist und sich das Getriebe in der neutralen Stellung befindet,

(c) ein fünftes UND-Glied (31), dessen einer Eingang mit dem Zündschaltsensor (21-1) und dessen anderer Eingang mit dem Getriebepositionssensor (21-2) zur UND - Verknüpfung beider Eingangssignale sowie zur Ausgabe eines Spannungssignals mit H-Pegel verbunden sind, wenn der Zündschalter eingeschaltet ist und sich das Getriebe im ersten, zweiten oder Rückwärtsgang befindet,

(d) eine direkt mit einer ersten Referenzmuster - Speichereinheit (11a) verbundene Steuerung (5) zur Übertragung der Referenzmusterdaten in der ersten Referenzmuster - Speichereinheit (11a) zu dem Ähnlichkeiten feststellenden Komparator (12), unabhängig von der Fahrzeuggeschwindigkeit, wobei die Steuerung (5) ein Spannungssignal mit H-Pegel ausgibt, wenn irgendeiner der Befehle in das Mikrofon (2) gesprochen wird,

(e) ein erstes UND-Glied (27), dessen einer Eingang mit dem Inverter (32) und dessen anderer Eingang mit der Steuerung (5) zur UND - Verknüpfung beider Eingangssignale sowie zur Ausgabe eines Spannungssignals mit H-Pegel zu einer zweiten Referenzmuster - Speichereinheit (11b) verbunden sind, um die Referenzmusterdaten in der zweiten Referenzmusterspeichereinheit (11b) zu dem Ähnlichkeiten feststellenden Komparator (12) zu übertragen, wenn der Inverter (32) und die Steuerung (5) jeweils Spannungssignale mit H-Pegel ausgeben, wenn also der Zündschalter ausgeschaltet ist und irgendeiner der Befehle in das Mikrofon (2) gesprochen wird,

(f) ein zweites UND-Glied (28), dessen einer Eingang mit dem vierten UND-Glied (30) und dessen anderer Eingang mit der Steuerung (5) zur UND - Verknüpfung beider Eingangssignale sowie zur Ausgabe eines Spannungssignals mit H-Pegel zu einer dritten Referenzmuster - Speichereinheit (11c) verbunden sind, um die Referenzmusterdaten in der dritten Referenzmuster - Speichereinheit (11c) zu dem Ähnlichkeiten feststellenden Komparator (12) zu übertragen, wenn der Zündschalter eingeschaltet ist, sich das Getriebe in der neutralen Stellung befindet und irgendeiner der Befehle in das Mikrofon (2) gesprochen wird, und

(g) ein drittes UND-Glied (29), dessen einer Eingang mit dem fünften UND-Glied (31) und dessen anderer Eingang mit der Steuerung (5) zur UND - Verknüpfung beider Eingangssignale sowie zur Ausgabe eines Spannungssignals mit H-Pegel zur einer vierten Referenzmuster - Speichereinheit (11d) verbunden sind, um Referenzmusterdaten in der vierten Referenzmuster - Speichereinheit (11d), die in Form matrixförmig angeordneter phonetischer Daten vorliegen, zu dem Ähnlichkeiten feststellenden Komparator (12) zu übertragen, wenn der Zündschalter eingeschaltet ist, sich das Getriebe im ersten, zweiten oder Rückwärtsgang befindet, und irgendeiner der Befehle in Mikrofon (2) gesprochen wird.

7. Spracherkennungssystem nach Anspruch 3, dadurch gekennzeichnet, daß der Fahrzeuggeschwindigkeitsdetektor (21) ein Geschwindigkeitssensor zur Erzeugung von Pulssignalen mit einer Frequenz proportional zur Fahrzeuggeschwindigkeit ist, und daß die geschwindigkeitsabhängig arbeitende Wähleinrichtung (20) folgende Einheiten enthält:

(a) einen mit dem Geschwindigkeitssensor verbundenen Frequenz - Spannungswandler (22) (F-V Konverter) zur Umwandlung der vom Geschwindigkeitssensor gelieferten Pulsfrequenz in ein die Fahrzeuggeschwindigkeit angebendes Spannungssignal, sowie zur Ausgabe entsprechender Signale,

(b) einen Komparator (23), dessen Minuseingang mit dem F-V Konverter (22) verbunden ist, und an dessen Pluseingang eine Referenzspannung $(e_0)$ entsprechend einer Referenzfahrzeuggeschwindigkeit anliegt, wobei der Komparator (23) beide Eingangssignale miteinander vergleicht und ein Spannungssignal mit H-Pegel ausgibt, wenn das Spannungssignal vom F-V Konverter (22) unter die Referenzspannung $(e_0)$ fällt,

(c) einen Transistor (33), dessen Basisanschluß mit dem Komparator (23), und dessen Emitteranschluß mit Erdpotential verbunden sind, um das Spannungsignal vom Komparator (23) am Kollektoranschluß zu invertieren,

(d) einen direkt mit einem ersten Stellglied (14a) verbundenen Spracherkenner (100) zur Ansteuerung des ersten Stellgliedes (14a), unabhängig von der Fahrzeuggeschwindigkeit, wenn der Spracherkenner (100) ein Spannungssignal mit H-Pegel ausgibt, wenn also ein dem ersten Stellglied (14a) zugeordneter Befehl in das Mikrofon (2) gesprochen·wird,

(e) ein erstes UND-Glied (27), dessen einer Eingang mit dem Komparator (23) und dessen anderer Eingang mit dem Spracherkenner (100) zur UND - Verknüpfung beider Einganssignale sowie zur Ausgabe eines Signals zu einem zweiten Stellglied (14b) verbunden sind, um das zweite Stellglied (14b) zu aktivieren, wenn sowohl der Komparator (23) als auch der Spracherkenner (100) jeweils in Spannungssignal mit H-Pegel ausgeben, wenn also die Fahrzeuggeschwindigkeit unter die Referenzfahrzeugeschwindigkeit fällt und ein dem zweiten Stellglied (14b) zugeordneter Befehl in das Mikrofon (2) gesprochen wird, und

(f) ein drittes UND-Glied (29), dessen einer Eingang mit dem Spracherkenner (100) und dessen anderer Eingang mit dem Kollektoranschluß des Transistors (33) zur UND - Verknüpfung beider Eingangssignale sowie zur Ausgabe eines Spannungssignals mit H-Pegel zu einem vierten Stellglied (14d) verbunden sind, um das vierte Stellglied (14d) zu aktivieren, wenn sowohl der Transistor (33) als auch der Spracherkenner (100) ein Spannungssignal mit H-Pegel ausgeben, wenn also die Fahrzeuggeschwindigkeit die Referenzfahrzeuggeschwindigkeit übersteigt und ein dem vierten Stellglied (14d) zugeordneter Befehl in das Mikrofon (2) gesprochen wird.

8. Spracherkennungssystem nach Anspruch 3, dadurch gekennzeichnet, daß der Fahzeuggeschwindigkeitsdetektor (21) einen Zündschaltsensor (21-1) zur Ausgabe eines Spannungssignals mit H-Pegel enthält, wenn der Zündschalter eingeschaltet ist, sowie einen Getriebepositionssensor (21-3) zur Ausgabe eines Spannungssignals mit H-Pegel, wenn sich das Getriebe im ersten, zweiten oder Rückwärtsgang befindet, und daß die geschwindigkeitsabhängig arbeitende Wähleinrichtung (20) folgende Einheiten enthält:

(a) einen Inverter (32), dessen Eingang mit dem Zündschalter zur Invertierung des Eingangssignals verbunden ist, wobei Inverter (32) ein Spannungs-signal mit H-Pegel ausgibt, wenn der Zündschalter ausgeschaltet ist,

(b) ein fünftes UND-Glied (31), dessen einer Eingang mit dem Zündschaltsensor (21-1) und dessen anderer Eingang mit dem Getriebepositionssensor (21-3) zur UND - Verknüpfung beider Eingangssignale sowie zur Ausgabe eines Spannungssignals mit H-Pegel verbunden sind, wenn der Zündschalter eingeschaltet ist und sich das Getriebe im ersten, zweiten oder Rückwärtsgang befindet,

(c) einen direkt mit einem ersten Stellglied (14a) verbundenen Spracherkenner (100) zur Aktivierung des ersten Stellgliedes (14a), unabhängig von der Fahrzeuggeschwindigkeit, wenn der Spracherkenner (100) ein Spannungssignal mit H-Pegel ausgibt, wenn also ein dem ersten Stellglied (14a) zugeordneter Befehl in das Mikrofon (2) gesprochen wird,

(d) ein erstes UND-Glied (27), dessen einer Eingang mit dem Inverter (32) und dessen anderer Eingang mit dem Spracherkenner (100) sur UND - Verknüpfung beider Eingangssignale sowie zur Ausgabe eines Signals zu einem zweiten Stellglied (14b) verbunden sind, um das zweite Stellglied (14b) zu aktivieren, wenn der Inverter (32) und der Spracherkenner (100) jeweils ein Spannungssignal mit H-Pegel ausgeben, wenn also die Fahrzeuggeschwindigkeit Null ist und ein dem zweiten Stellglied (14b) zugeordneter Befehl in das Mikrofon (2) gesprochen wird, und

(e) ein drittes UND-Glied (29), dessen einer Eingang mit dem Spracherkenner (100) und dessen anderer Eingang mit dem fünften UND-Glied (31) zur UND - Verknüpfung beider Eingangssignale sowie zur Ausgabe eines Spannungssignals mit H-Pegel zum vierten Stellglied (14d) verbunden sind, um das vierte Stellglied (14d) zu aktivieren, wenn sowohl das fünfte UND-Glied (31) als auch der Spracherkenner (100) Spannungssignale mit H-Pegel ausgeben, wenn also die Fahrzeuggeschwindigkeit nicht Null ist und ein dem vierten Stellglied (14d) zugeordneter Befehl in das Mikrofon (2) gesprochen wird.

9. Spracherkennungssystem nach Anspruch 4, dadurch gekennzeichnet, daß der Fahrzeuggeschwindigkeitsdetektor (21) ein Geschwindigkeitssensor zur Erzeugung von Pulssignalen mit einer Frequenz proportional zur Fahrzeuggeschwindigkeit ist, und daß geschwindigkeitsabhängig arbeitende Wähleinrichtung (20) folgende Einheiten enthält:

(a) einen mit dem Geschwindigkeitssensor verbundenen Frequenz - Spannungswandler (22) (F-V Konverter) zur Umwandlung der Pulsfrequenz vom Geschwindigkeitssensor in ein der Fahrzeuggeschwindigkeit entsprechendes Spannungssignal, sowie zur Ausgabe entsprechender Signale,

(b) einen Komparator (23), dessen Minuseingang mit dem F-V konverter (22) verbunden ist, und der an seinem Pluseingang eine Referenzspannung ($e_0$) entsprechend einer Referenzfahrzeuggeschwindigkeit empfängt wobei der Komparator (23) die beiden Eingangssignale miteinander vergleicht und ein Spannungssignal mit H-Pegel ausgibt, wenn das Spannungssignal vom F-V Konverter (22) unter die Referenzspannung fällt,

(c) einen Transistor (33), dessen Basisanschluß mit dem Komparator (23) und dessen Emitteranschluß mit Erdpotential verbunden sind, um das Spannungssignal vom Komparator (23) an seinem Kollektoranschluß zu invertieren,

(d) ein mit dem Spracherkenner (100) direkt verbundenes erstes Mikrofon (2a) zur Umwandlung gesprochener Befehle in elektrische Signale sowie zur Übertragung der Signale zum Spracherkenner (100), unabhängig von der Fahrzeuggeschwindkeit,

(e) einen ersten Analogschalter (35), der zwischen einem zweiten Mikrofon (2b) und dem Spracherkenner (100) liegt, und dessen Steuereingang mit dem Komparator (23) verbunden ist, wobei der ersten Analogschalter (35) durch ein Spannungssignal mit H-Pegel vom Komparator (23) einschaltbar ist, um die vom zweiten Mikrofon (2b) aufgrund der gesprochenen Befehle erhaltenen elektrischen Signale zum Spracherkenner (100) zu übertragen, wenn die Fahrzeuggeschwindigkeit unter die Referenzfahrzeuggeschwindigkeit fällt, und

(f) einen dritten Analogschalter (37), der zwischen einem dritten Mikrofon (2d) und dem Spracherkenner (100) angeordnet ist, und dessen Steuereingang mit dem Kollektoranschluß des Transistors (33) verbunden ist, wobei der dritte Analogschalter (37) durch ein Spannungssignal mit H-Pegel vom Transistor (33) einschaltbar ist, um elektrische Signal zum Spracherkenner (100) zu übertragen, die durch Umwandlung gesprochener Befehle mit Hilfe des dritten Mikrofons (2d) erhalten worden sind, wenn die Fahrzeuggeschwindigkeit die Referenzfahrzeuggeschwindigkeit übersteigt.

10. Spracherkennungssystem nach Anspruch 4, dadurch gekennzeichnet, daß der Fahrzeuggeschwindigkeitsdetektor (21) einen Zündschaltsensor (21-1) zur Ausgabe eines Spannungssignals mit H-Pegel enthält, wenn ein Zündschalter eingeschaltet ist, sowie einen Getriebepositionssensor (21-3) zur Ausgabe eines Spannungssignals mit H-Pegel, wenn sich das Getriebe im ersten, zweiten oder Rückwärtsgang befindet, und daß die geschwindigkeitsabhängig arbeitende Wähleinrichtung (20) folgende Einheiten enthält:

(a) einen Inverter (3), dessen Eingang mit dem Zündschalter zur Invertierung Eingangssignals verbunden ist, wobei der Inverter (32) ein Spannungssignal mit H-Pegel ausgibt, wenn, der Zündschalter ausgeschaltet ist,

(b) ein fünftes UND-Gleid (31), dessen einer Eingang mit dem Zündschaltsensor (21-1) und dessen anderer Eingang mit dem Getriebepositionssensor (21-3) zur UND - Verknüpfung beider Eingangssignale sowie zur Ausgabe eines Spannungssignals mit H-Pegel verbunden sind, wenn der Zündschalter eingeschaltet ist und sich das Getriebe im ersten, zweiten oder Rückwärtsgang befindet,

(c) ein mit dem Spracherkenner (100) direkt verbundenes erstes Mikrofon (2a) zur Umwandlung gesprochener Befehle in elektrische Signale sowie zur Übertragung der Signale zum Spracherkenner (100), unabhängig von der Fahrzeuggeschwindigkeit,

(d) einen ersten Analogschalter (35), der zwischen einem zweiten Mikrofon (2b) und dem Spracherkenner (100) angeordnet, ist, und dessen Steuereingang mit dem Inverter (32) verbunden ist, wobei der erste Analogschalter (35) durch ein Spannungssignale mit H-Pegel vom ersten Inverter (32) einschaltbar ist, um elektrische Signale zum Spracherkenner (100) zu übertragen, die durch Umwandlung gesprochener Befehle mit dem zweiten Mikrofon (2b) erhalten worden sind, wenn die Fahrzeuggeschwindigkeit Null ist, und

(e) einen dritten Analogschalter (37), der zwischen einem dritten Mikrofon (2d) und dem Spracherkenner (100) angeordnet ist, und dessen Steuereingang mit dem Kollektoranschluß des Transistors (33) verbunden ist, wobei der dritte Analogschalter (37) durch ein Spannungssignal mit H-Pegel vom Transistor (33) einschaltbar ist, um elekrische Signale zum Spracherkenner (100) zu übertragen, die durch Umwandlung gesprochener Befehle mit Hilfe des dritten Mikrofons (2d) erhalten worden sind, wenn die Fahrzeuggeschwindigkeit nicht Null ist.

11. Spracherkennungssystem nach Anspruch 5 oder 6, dadurch gekennzeichnet, daß in der ersten Referenzmuster - Speichereinheit (11a) Referenzmusterdaten in Form matrixförmig angeordneter phonetischer Daten für die Befehle "Klimaanlage ein/aus", "Radio ein/aus", "Kanal 1, 2, ...,", und "Fenster öffnen/schließen" gespeichert sind.

12. Spracherkennungssystem nach Anspruch 5 oder 6, dadurch gekennzeichnet, daß in der zweiten Referenzmuster - Speichereinheit (11b) Referenzmusterdaten in Form matrixförmig angeordneter phonetischer Daten für die Befehle "Tür öffnen" und "Kofferraumdeckel öffnen" gespeichert sind.

13. Spracherkennungsystem nach Anspruch 5 oder 6, dadurch gekennzeichnet, daß in der dritten Referenzmuster - Speichereinheit (11c) Referenzmusterdaten in Form matrixförmig angeordneter phonetischer Daten fur den Befehl "Vorderscheinwerfer ein/aus" gespeichert sind.

14. Spracherkennungssystem nach Anspruch 5 oder 6, dadurch gekennzeichnet, daß in der vierten Referenzmuster - Speichereinheit (11d) Referenzmusterdaten in Form matrixförmig angordneter phonetischer Daten für den Befehl "Fernlicht/Abblendlicht" gespeichert sind.

**Revendications**

1. Un dispositif de reconnaissance de paroles pour un véhicule automobile, distiné à délivrer plusieurs signaux de mise en action à plusieurs actionneurs (14) du véhicule pour leur mise en action selon des instructions parlées, comprenant:

un microphone (2) destiné à convertir des instructions parlées en signaux électriques et à délivrer des signaux correspondant à celles-ci:

—un dispositif (100) de reconaissance de paroles comprenant un contrôleur (5), des unités (11) de mémoire de motifs de référence et un comparateur de ressemblance (12), ledit dispositif de reconnaissance réagissant aux signaux dudit microphone (2) pour délivrer le signal de mise en action des actionneurs (14) du véhicule, respectivement, quand le signal converti ressemble à l'une des données de motifs de référence stockées chacune dans lesdites unités (11) de mémoire de motifs de référence, caractérisé par:

(a) un moyen (21) de détection de la vitesse du véhicule pour détecter la vitesse du véhicule et délivrer des signaux correspondants à celle-ci, et

(b) un moyen (20) de sélection de paroles réagissant aux signaux de vitesse de véhicule pour classer la vitesse détectée du véhicule par valeur de signal et permettre sélectivement audit dispositif (100) de reconnaissance de paroles de délivrer le signal de mise en action à l'actionneur respectif du véhicule selon la valeur classifiée de la vitesse détectée du véhicule.

2. Un dispositif de reconnaissance de paroles pour un véhicule automobile comme exposé dans la revendication 1, dans lequel ledit moyen (20) de sélection de paroles selon la vitesse est connecté entre ledit contrôleur (5) et lesdites unités (11) de mémoire de motifs de référence pour permettre sélectivement à un signal de commande de passer dudit contrôleur auxdites unités (11) de mémoire de motifs de référence respectives, selon le classement par valeurs de vitesse détectée du véhicule.

3. Dispositif de reconnaissance de paroles pour un véhicule automobile comme exposé dans la revendication 1, dans lequel ledit moyen (20) de sélection de paroles selon la vitesse est connecté entre ledit dispositif (110) de reconnaissance de paroles et les actionneurs (14) afin de permettre sélectivement à un signal de mise en action de passer du dispositif de reconnaissance de paroles audit actionneur respectif à travers lui, selon la valeur classée de la vitesse détectée du véhicule.

4. Un dispositif de reconnaissance de paroles pour un véhicule automobile comme exposé dans la revendication 1, dans lequel ledit moyen (20) de sélection de paroles selon la vitesse est connecté entre ledit microphone (2) et ledit dispositif (100) de reconnaissance de paroles pour permettre sélectivement à des signaux convertis par ledit microphone de passer vers ledit dispositif de reconnaissance de paroles à travers lui, selon le classement par valeurs de la vitesse détectée du véhicle.

5. Un dispositif de reconnaissance de paroles pour un véhicule automobile comme exposé dans la revendication 2, dans lequel ledit moyen (21) de détection de vitesse du véhicule est un élément sensible à la vitesse pour générer des signaux impulsionnels dont la fréquence est proportionnelle à la vittese du véhicule, et ledit moyen (20) de sélection de paroles selon la vitesse comprend:

(a) un convertisseur fréquence-tension (convertisseur F-V) (22) connecté audit élément (21) sensible à la vitesse pour convertir la fréquence impulsionnelle dudit élément (21) sensible à la vitesse en signal de tension représentatif de la vitesse du véhicule et pour délivrer des signaux correspondant à celle-ci;

(b) un premier comparateur (23) dont la borne d'entrée négative est connectée audit convertisseur F-V (22) et à la borne d'entrée positive duquel est appliquée une tension de référence plus basse $e_1$ représentative d'une vitesse de référence plus basse du véhicule, ledit premier comparateur (23) comparant les deux signaux d'entrée et délivrant un signal de niveau de tension (H) quand le signal de tension dudit convertisseur F-V (22) diminue en-dessous de la tension de référence plus basse;

(c) un deuxième comparateur (24) dont la borne d'entrée positive est connectée audit convertisseur F-V (22) et à la borne d'entrée négative duquel est appliquée une tension de référence plus élevée $e_2$ représentative d'une vitesse de référence plus élevée du véhicule, ledit deuxième comparateur (24) comparant les deux signaux d'entrée et délivrant un signal de niveau de tension (H) quand le signal de tension en provenance dudit convertisseur F-V (22) dépasse la tension de référence plus élevée,;

(d) une porte NON-OU (25) font deux bornes d'entrée sont connectées auxdits premier et deuxième comparateurs (23, 24) pour effectuer l'opération NON-OU sur les deux signaux d'entrée et délivrer un signal de niveau de tension (H) quand le signal de tension dudit convertisseur F-V (22) se trouve entre les tensions de référence plus élevée et plus basse;

(e) ledit contrôleur (5) étant directement connecté à une première unité (11a) de mémoire de motifs de référence pour transférer les données de motifs de référence de ladite première unité de mémoire de motifs de référence audit comparateur de ressemblance (12), quelle que soit la vitesse du véhicule, ledit contrôleur délivrant un signal de niveau de tension (H) quand l'une quelconque des instructions parlées est introduite dans ledit microphone;

(f) une première porte ET (27) dont une borne d'entrée est reliée audit premier comparateur et dont l'autre borne d'entrée est reliée audit contrôleur afin d'effectuer l'opération ET sur les deux signaux d'entrée et de délevrer un signal de tension (H) à une deuxième unité (11b) de mémoire de motifs de référence afin de transférer les données de motifs de référence de ladite deuxième unité de mémoire de motifs de référence audit comparateur de ressemblance (12) quand ledit premier comparateur et ledit contrôleur délivrent un signal de niveau de tension (H), respectivement, c'est-à-dire quand la vitesse du véhicule dimine au-dessous de la vitesse de référence plus basse du vèhicule et que l'une quelconque des instructions parlées est introduite dans ledit microphone;

(g) une deuxième porte ET (28) dont une borne d'entrée est reliée à ladite porte NON-OU (25) et dont l'autre borne d'entrée est reliée audit contrôleur afin d'effectuer l'opération ET sur les deux signaux d'entrée et délivrer un signal de niveau de tension (H) à une troisième unité (11c) de mémoire de motifs de référence pour transférer les données de motifs de référence de ladite troisième unité (11c) de mémoire de motifs de référence audit comparateur de ressemblance (12) quand ladite porte NON-OU (25) et ledit contrôleur (5) délivrent tous deux un signal de niveau de tension élevée, respectivement, c'est-à-dire quand la vitesse du véhicule se trouve entre la vitesse de référence plus basse et plus élevée du véhicule et que l'une quelconque des instructions parlées est introduite dans ledit microphone (2), et

(h) une troisième porte ET (29) dont une borne d'entrée est reliée audit deuxième comparateur (24) et dont l'autre borne d'entrée est connectée audit contrôleur (5) afin d'effectuer l'opération ET sur les deux signaux d'entrée et de délivrer un signal de niveau de tension (H) à une quatrième unité (11d) de mémoire de motifs de référence afin de transférer les données de motifs de référence de ladite unité (11d) de mémoire de motifs audit comparateur de ressemblance (12) quand ledit deuxième comparateur (24) et ledit contrôleur (5) délivrent un signal de niveau de tension (H), respectivement, c'est-à-dire quand la vitesse du véhicule augmente au-delà de la vitesse de référence plus élevée du véhicule et que l'une quelconque des instructions parlées est introduite dans ledit microphone (2).

6. Un dispositif de reconnaissance de paroles pour un vehicle automobile comme expose dans la revendication 2, dans lequel ledit moyen de détection (21) du véhicule comprend un élément (21-1) sensible à la position du contacteur d'allumage afin de délivrer un signal de niveau de tension (H) quand le contacteur d'allumage est fermé, un élément (21-2) sensible à la position de marche afin de délivrer un signal de niveau de tension (H) quand on fait passer un systéme de transmission à l'une quelconque des positions MARCHE en 1ère, MARCH en 2ème et MARCHE ARRIERE, et un élément (21-3) sensible à la position neutre afin de délivrer un sign de niveau de tension (H) quand on fait passer un système de transmission à la position NEUTRE, et ledit moyen (20) de sélection de paroles selon la vitesse comprend:

(a) un inverseur (32) dont la borne d'entrée est connectée audit élément (21-1) sensible à la position du contacteur d'allumage pour inverser le signal d'entrée et délivrer un signal de niveau de tension (H) quand le contacteur d'allumage est ouvert;

(b) une quatrième porte ET (30) dont une borne d'entrée est connectée audit élément (21-1) sensible à la position du contacteur d'allumage et dont l'autre borne d'entrée est connectée audit élément (21-3) sensible à la position neutre afin d'effectuer l'opération ET sur les deux signaux d'entrée et de délivrer un signal de niveau de tension (H) quand le contacteur d'allumage est fermé et qu'on fait passer le système de transmission à la position NEUTRE;

(c) une cinquième porte ET (31) dont une borne d'entrée est connectée audit élément (21-1) sensible à la position du contacteur d'allumage et dont l'autre borne d'entrée est connectée audit élément (21-2) sensible à la position de marche afin d'effectuer l'opération ET sur les deux signaux d'entrée et de délivrer un signal de niveau de tension (H) quand le contacteur d'allumage est fermé et qu'on fait passer le système de transmission à l'une quelconque des positions MARCHE en 1ère, MARCHE en 2 ème et MARCHE ARRIERE;

(d) ledit contrôleur (5) étant directement connecté à une première unité (11a) de mémoire de motifs de référence pour tansférer les données de motifs de référence de ladite première unité (11) de mémoire de motifs de référence audit comparateur de ressemblance (12) quelle que soit la vitesse du véhicule, ledit contrôleur (5) délivrant un signal de niveau de tension (H) quand l'une quelconque des instructions parlées est introduite dans ledit microphone (2);

(e) une première porte ET (27) dont une borne d'entrée est connectée audit inverseur (32) dont l'autre d'entrée est connectée audit contrôleur (5) pour effectuer une opération ET sur les deux signaux d'entrée et délivrer un signal de niveau de tension (H) à une deuxième unité (11b) de mémoire de motifs de référence afin de transférer les données de motifs de référence de ladite unité (11b) de mémoire de motifs de référence audit comparateur de ressemblance (12) quand ledit inverseur (32) et ledit contrôleur (5), délivrent un signal de niveau de tension (H), respectivement, c'est-à-dire quand le contacteur d'allumage est ouvert et que l'une quelconque des instructions parlées est introduite dans ledit microphone;

(f) une deuxième porte ET (28) dont une borne d'entrée est connectée à ladite quantrième porte ET (30) et dont l'autre borne d'entrée est connectée audit contrôleur afin d'effectuer l'opération ET sur les deux signaux d'entré et de délivrer un signal de niveau de tension (H) à une troisième unité (11c) de mémoire de motifs de référence pour transférer les données de motifs de référence de ladite unité (11c) de mémoire de motifs de référence audit comparateur de ressemblance (12) quand le contacteur d'allumage est fermé, le système de transmission est mis en position NEUTRE et l'une quelconque des instructions parlées est introduite dans ledit microphone (2); et

(g) une troisième porte ET (29) dont une borne d'entrée est connectée à ladite cinquième porte ET (31) et dont l'autre borne d'entrée est connectée audit élément (21-2) sensible à la position de marche afin d'effectuer l'opération ET sur les deux signaux d'entrée et de délivrer un signal de niveau de tension (H) à une quatrième unité (11d) de mémoire de motifs de référence pour transférer les données de motifs phonétiques en matrice de référence de ladite quatrième unité (11d) de mémoire de motifs audit comparateur de ressemblance (12) quand ledit contacteur d'allumage est fermé, le système de transmission est mis dans l'une quelconque des positions MARCHE en 1ère, MARCHE en 2ème et MARCHE ARRIERE, et l'une quelconque des instructions parlées est introduite dans ledit microphone (2).

7. Un dispositif de reconnaissance de paroles pour un véhicule automobile comme exposé dans la revendication 3, dans lequel ledit moyen (21) de détection de la vitesse du véhicule est un élément sensible à la vitesse pour générer des signaux impulsionnels dont la fréquence est proportionnelle à la vitesse du véhicule et ledit moyen (20) de sélection de paroles selon la vitesses comprend:

(a) un convertisseur fréquence-tension (convertisseur F-V) (22) connecté audit élément sensible à la vitesse pour convertir la fréquence impulsionnelle dudit élément sensible à la vitesse en un signal de tension représentatif de la vitesse du véhicule et délivrer des signaux correspondants;

(b) un comparateur (23) dont la borne d'entrée négative est connectée audit convertisseur F-V (22) et à la borne d'entrée positive duquel est appliquée une tension de référence ($e_0$) représentative d'une vitesse de référence du véhicule, ledit comparateur (23) comparant ses deux signaux d'entrée et délivrant un signal de niveau de tension (H) quand le signal de tension dudit convertisseur F-V descend au-dessous de la tension de référence;

(c) un transistor (33) dont la borne de la base est connectée audit comparateur (23) et dont la borne d'emetteur est mise à la terre pour inverser le signal de tension en provenance dudit comparateur (23) à la borne de collecteur de celui-ci;

(d) ledit dispositif (100) de reconaissance de paroles étant connecté directement à un premier actionneur (14a) pour la mise en action dudit premier actionneur (14a), quelle que soit la vitesse du véhicule, quand ledit dispositif (100) de reconnaissance de paroles délivre un signal de niveau de tension (H), c'est-à-dire quand l'instruction parlée correspondant audit premier actionneur (14a) est introduite dans ledit microphone (2);

(e) une première porte ET (27) dont une borne d'entrée est connectée audit comparateur (23) et dont l'autre borne d'entrée est connectée audit dispsitif (100) de reconnaissance de paroles afin d'effectuer l'operation ET sur les deux signaux d'entrée et de délivrer un signal à un deuxième actionneur (14b) afin de mettre en action ledit deuxième actionneur (14b) quand ledit comparateur (23) et ledit dispositif (100) de reconnaissance de paroles délivrent tous deux un signal de niveau de tension (H) repsectivement, c'est-à-dire quand la vitesse du véhicule descend au-dessous de la vitesse de référence du véhicule et qu'une instruction parlée correspondant audit deuxième actionneur (14b) est introduite dans ledit microphone (2); et

(f) une troisième porte ET (29) dont une borne d'entrée est connectée audit dispositif (100) de reconnaissance de paroles et dont l'autre borne d'entrée est connectée à la borne de collecteur dudit transistor (33) afin d'effectuer l'operation ET sur ses deux signaux d'entrée et de délivrer un signal de niveau de tension (H) à un quatrième actionneur (14d) afin de mettre en action ledit quatrième actionneur quand ledit transistor (33) et ledit dispositif (100) de reconnaissance de paroles délivrent tous deux un signal de niveau de tension (H), respectivement, c'est-à-dire quand la vitesse du véhicule s'élève au-dessus de la vitesse de référence du véhicule et qu'une instruction parlée correspondant audit quatrième actionneur est introduite dans ledit microphone (2).

8. Un dispositif de reconnaissance de paroles pour un pour un véhicule automobile comme exposé dans la revendication 3, dans lequel ledit moyen (21) de détection de vitesses du véhicule comprend un élément (21-1) sensible à la position du contacteur d'allumage afin de délivrer un signal de niveau de tension (H) quand un contacteur d'allumage est fermé et un élément (21-3) sensible à la position de marche afin de délivrer un signal de niveau de tension (H) quand un système de transmission se trouve dans l'une quelconque des positions MARCHE en 1ère, MARCHE en 2ème et MARCHE ARRIERE, et ledit moyen (20) de sélection de paroles selon la vitesse comprend:

(a) un inverseur (32) dont la borne d'entrée est connectée audit contracteur d'allumage afin d'inverser son signal d'entrée et de délivrer un signal de niveau de tension (H) quand le contacteur d'allumage est ouvert;

(b) une cinquième porte ET (31) dont une borne d'entrée est connectée audit élément (21-1) sensible au contacteur d'allumage et dont l'autre borne d'entrée est connectée audit élément (21-3) sensible à la position de marche afin d'effectuer une opération ET sur ses deux signaux d'entrée et de délivrer un signal de niveau de tension (H) quand le contacteur d'allumage est fermé et que l'on fait passer le systéme de transmission à l'une quelconque des positions MARCHE en 1ère, MARCHE en 2ème et MARCHE ARRIERE;

(c) ledit dispositif (100) de reconnaissance de paroles étant connectée directement à un premier actionneur (14a) pour mettre en action ledit premier actionneur, quelle que soit la vitesse du véhicule, quand ledit dispositif de reconnaissance de paroles délivre un signal de niveau de tension (H), c'est-à-dire quand une instruction parlée correspondant audit premier actionneur est introduite dans ledit microphone (2);

(d) une première porte ET (27) dont une borne d'entrée est connectée audit inverseur (32) et dont l'autre borne d'entrée est connectée audit dispositif (100) de reconnaissance de paroles afin d'effectuer l'opération ET sur les deux signaux d'entrée et de délivrer un signal à un deuxiéme actionneur (14b) afin de mettre en action ledit deuxième actionneur (14b) quand ledit inverseur (32) et ledit dispositif de reconnaissance de paroles délivrent un signal de niveau de tension (H), respectivement, c'est-à-dire quand la vitesse du véhicule est nulle et qu'une instruction parlée correspondant audit deuxième actionneur est introduite dans ledit microphone (2); et

(e) une troisième porte ET (29) dont une borne d'entrée est connectée audit dispositif (100) de reconnaissance de paroles et dont l'autre borne d'entrée est connectée à ladite cinquième porte ET (31) afin d'effectuer l'opération ET sur ses deux signaux d'entrée et de délivrer un signal de niveau de tension (H) à un quatrième actionneur (14d) afin de mettre en action ledit quatrième actionneur (14d) quand ladite cinquième porte (31) et ledit dispositif (100) de reconnaissance de paroles délivrent un signal de niveau de tension (H), respectivement, c'est-à-dire quand la vitesse du véhicule n'est pas nulle et qu'une instruction parlée correspondant audit quatrième actionneur est introduite dans ledit microphone (2).

9. Un dispositif de reconnaissance de paroles pour un véhicule automobile comme exposé dans la revendication 4, dans lequel ledit moyen (21) de détection de la vitesse du véhicule est un élément sensible à la vitesse pour générer des signaux impulsionnels dont la fréquence proportionnelle à la vitesse du véhicule et ledit moyen (20) de sélection de paroles selon la vitesse comprend:

(a) un convertisseur frequence-tension (convertisseur F-V) (22) connecté audit élément sensible à la vitesse afin de convertir la fréquence impulsionnelle dudit élément sensible à la vitesse en un signal de tension représentatif de la vitesse du véhicule et de délivrer des signaux correspondants;

(b) un comparateur (23) dont la borne d'entrée négative est connectée audit convertisseur F-V (22) et à la borne d'entrée positive duquel est appliquée une tension de référence ($e_0$) représentative d'une vitesse de référence du véhicule, ledit comparateur (23) comparant ses deux signaux d'entrée et délivrant un signal de niveau de tension (H) quand le signal de tension dudit convertisseur F-V (22) descend au-dessous de la tension de référence;

(c) un transistor (33) dont la borne de la base est connectée audit comparateur (33) et dont la borne d'émetteur est mise à la masse afin d'inverser le signal de tension dudit comparateur (23) à sa borne de collecteur;

(d) un premier microphone (2a) étant connecté directement audit dispositif (100) de reconnaissance de paroles afin de transmettre des signaux électriques d'instuctions parlées convertis par ledit premier microphone (2a) audit dispositif (100) de reconnaissance de paroles quelle que soit la vitesse du véhicule;

(e) un premier commutateur analogique (35) branché entre un deuxiéme microphone (2b) et ledit dispositif (100) de reconnaissance de paroles, dont la borne de commande est connectée audit comparateur (23), ledit premier commutateur analogique (35) étant rendu conducteur pour transmettre des signaux électriques d'instructions parlées convertis par ledit deuxième microphone (26) audit dispositif (100) de reconnaissance de paroles en réponse à un signal de niveau de tension (H) en provenance dudit comparateur (23), c'est-à-dire quand la vitesse du véhicule descend au-dessous de la vitesse de référence du véhicule; et

(f) un troisiéme commutateur analogique (37) brnaché entre un troisième microphone (2d) et ledit dispositif (100) de reconnaissance de paroles, dont la borne de commande est connectée à la borne de collecteur dudit transistor (33), ledit troisième commutateur analogique (37) étant rendu conducteur pour transmettre des signaux électriques d'instructions parlées convertis par ledit troisième microphone (2d) audit dispositif de reconnaissance de paroles en réponse à un signal de niveau de tension (H) en provenance dudit transistor (33), c'est-à-dire quand la vitesse du véhicule s'élève au-dessus de la vitesse de référence du véhicule.

10. Un dispositif de reconnaissance de paroles pour un véhicule automobile comme exposé dans la revendication 4, dans lequel ledit moyen (21) de détection de la vitesse du véhicule comprend un élément (21-1) sensible au contacteur d'allumage afin de délivrer un signal de niveau de tension (H) quand un contacteur d'allumage est fermé et un élément (21-3) sensible à la position de marche afin de délivrer un signal de niveau de tension (H) quand on fait passer un système de transmission à l'une quelconque des positions MARCHE en 1ère, MARCHE EN 2ème et MARCHE ARRIERE, et ladite unité de sélection de paroles selon la vitesse comprend:

(a) un inverseur (32) dont la borne d'entrée est connectée audit contacteur d'allumage afin d'inverser son signal d'entrée et de délivrer un signal de niveau de tension H quand le contacteur d'allumage est ouvert:

(b) une cinquième porte ET (31) dont une borne d'entrée est connectée audit élément (21-1) sensible à la position du contacteur d'allumage et dont l'autre borne d'entrée est connectée audit élément (21-3) sensible à la position de marche afin d'effectuer l'opération ET sur ses deux signaux d'entrée et de délivrer un signal de niveau de tension (H) quand le contacteur d'allumage est fermé et qu'on fait passer le système de transmission à l'une quelconque des positions MARCHE en 1ère, MARCHE en 2ème et MARCHE ARRIERE:

(c) un premier microphone (2a) étant connecté directement audit dispositif (100) de reconnaissance de paroles afin de transmettre des signaux électriques d'instructions parlée convertis par ledit premier microphone (2a) audit dispositif (100) de reconnaissance de paroles quelle que soit la vitesse du véhicule;

(d) un premier commutateur analogique (35) branché entre un deuxième microphone (2b) et ledit dispositif (100) de reconnaissance de paroles, dont la borne de commande est connectée audit inverseur (32), ledit premier commutateur analogique (35) étant rendu conducteur afin de transmettre des signaux électriques d'instructions parlées convertis par ledit deuxième microphone (2b) audit dispositif (100) de reconnaissance de paroles en réponse à un signal de niveau de tension (H) en provenance dudit inverseur (32), c'est-à-dire quand la vitesse du véhicule est nulle; et

(e) un troisième commutateur analogique (37) branché entre un troisième microphone (2d) et ledit dispositif (100) de reconnaissance de paroles, dont la borne de commande est connectée à la borne de collecteur dudit transistor (33), ledit troisième commutateur analogique (37) étant rendu conducteur afin de transmettre les signaux électriques d'instructions parlées convertis par ledit triosième microphone (2d) audit dispositif (100) de reconnaissance de paroles en réponse à un signal de niveau de tension (H) en provenance dudit transistor (33), c'est-à-dire quand la vitesse du véhicule n'est par nulle.

11. Un dispositif de reconnaissance de paroles pour un véhicule automobile comme exposé dans l'une ou l'autre revendication 5 ou 6, dans lequel ladite première unité (11a) de mémoire de motifs de référence stocke des données de motifs phonétiques en matrice de référence pour des instructions parlées "Conditionnement d'air marche/arrêt", "Radio marche/arrêt", "Canal 1, 2, 3...", et "Ouverture/fermeture fenêtre".

12. Un dispositif de reconnaissance de paroles pour un véhicule automobile comme exposé dans l'une ou l'autre revendication 5 ou 6, dans lequel ladite deuxième unité (11b) de mémoire de motifs de référence stocke des données de motifs phonétiques en matrice de référence pour des instructions parlées "Ouverture porte" et "Ouverture couvercle coffre".

13. Un dispositif de reconnaissance de paroles pour un véhicule automobile comme exposé dans l'une ou l'autre revendication 5 ou 6, dans lequel ladite troisième unité (11c) de mémoire de motifs de référence stocke des données de motifs phonétiques en matrice de référence pour une instruction parlée "Phare marche/arrêt".

14. Un dispositif de reconnaissance de paroles pour un véhicule automobile comme exposé dans l'une ou l'autre revendication 5 ou 6, dans lequel ladite quatrième unité (11d) de mémoire de motifs de référence stocke des données de motifs phonétiques en matrice de référence pour une instruction parlée "Phare longue portée/code".

# FIG.1
## PRIOR ART

0 094 449

# FIG.2

# FIG.3

SPEED SENSOR 21

F-V CONVERTER 22

E

R3

R2

R1

e2

e1

24 2nd  H:V>5 km/h

23 1st  H:V<1 km/h

25  H:1<V<5 km/h  L  L

29 3rd  11d  HEADLIGHT HIGH-BEAM

28 2nd  11c  HEADLIGHT OFF

27 1st  11b  DOOR OPEN

26  11a  AIR CON

20

CONTROLLER 5

# FIG.4

# FIG.5

## *FIG.6*

## *FIG.7*

## *FIG.8*

5